# FASCICULE DE BREVET EUROPEEN

(11) **EP 1 233 530 B1**
(45) Date de publication et mention de la délivrance du brevet: **06.11.2013**
(21) Numéro de dépôt: 02290352.0
(22) Date de dépôt: 13.02.2002
(51) Int. Cl.: H04B 1/50, H04B 1/12, H04B 1/52

(54) **Terminal mobile de réseau de radiotéléphonie à deux chaines d'émission et de réception et deux antennes**
Mobilfunkendgerät eines Mobilfunknetzwerkes mit Sender- und Empfänger-Schaltungen und zwei Antennen
Mobile terminal for radio telephone network having transmitter and receiver chains and two antennas

(30) Priorité: 15.02.2001 FR 0102058
(43) Date de publication de la demande: 21.08.2002
(73) Titulaire: Apple Inc., Cupertino, CA 95014 (US)
(72) Inventeur: Romao, Fernando, 78360 Montesson (FR)
(74) Mandataire: Lang, Johannes

(56) Documents cités:
- WO-A1-96/15596
- GB-A- 2 329 554
- US-A- 5 444 864
- US-A- 5 815 805
- US-B1- 6 169 912

## Description

La présente invention concerne les transmissions radio par les terminaux mobiles de radiotéléphonie.

Un terminal mobile de radiotéléphonie communique avec les autres par une liaison bidirectionnelle, pour laquelle il dispose d'une fréquence pour chaque sens de transmission. L'émetteur du terminal constitue toutefois un puissant perturbateur pour son récepteur.

Pour éviter ces perturbations, deux techniques sont employées.

La première technique consiste à faire fonctionner le terminal à l'alternat, c'est-à-dire à inhiber cycliquement le récepteur et l'émetteur.

La deuxième technique consiste à faire fonctionner le terminal en full-duplex mais en séparant les chaînes d'émission et de réception reliées à l'antenne. Pour cela, on interpose un aiguilleur appelé duplexeur, qui transmet l'énergie de l'émetteur exclusivement à l'antenne et qui transmet l'énergie captée par l'antenne exclusivement au récepteur.

L'équilibre électrique du duplexeur, pour atteindre le pouvoir de séparation ou découplage voulus entre chaînes, nécessite que l'antenne conserve une impédance adaptée, de valeur déterminée, dans la bande de fréquences d'émission et dans celle de réception.

En pratique, pour atteindre ce but, l'antenne doit aussi rester adaptée dans la bande inutilisée séparant les bandes utiles. L'antenne doit donc être à large bande, en ce qui concerne son adaptation, c'est-à-dire relativement complexe et volumineuse. Le coût et le volume du duplexeur sont par ailleurs élevées et, en outre, il présente des pertes qu'il faut compenser par une émission à niveau accru, ce qui obère l'autonomie en énergie du terminal.

La présente invention se rapporte à cette deuxième technique, de fonctionnement full-duplex, et vise à s'affranchir des inconvénients ci-dessus liés au duplexeur. Le préambule de la revendication 1 est basé sur le document WO 9615596.

A cet effet, l'invention concerne un terminal mobile de réseau de radiotéléphonie comportant des moyens radio comprenant une chaîne d'émission et une chaîne de réception agencées pour fonctionner en full-duplex dans deux bandes de fréquences respectives, caractérisé par le fait que chaque chaîne comporte une antenne dédiée.

Le mérite de la demanderesse est d'être allée à l'encontre du préjugé selon lequel, pour résoudre le problème de la protection d'une chaîne de réception contre les signaux radio d'une chaîne d'émission, il fallait prévoir un duplexeur de découplage des chaînes à l'intérieur de l'interface radio du terminal.

La demanderesse a en effet posé différemment le problème ci-dessus, c'est-à-dire qu'elle a considéré que le vrai problème, dans sa généralité, était d'éviter que les signaux générés par la chaîne d'émission parviennent à la sortie de la chaîne de réception, et qu'il convenait d'envisager des solutions sans duplexeur.

Ainsi, les inconvénients liés à un duplexeur n'existent plus et en outre chaque antenne peut être de taille limitée puisqu'elle ne traite que sa bande de fréquences utiles.

De préférence, les moyens radio comportent des moyens agencés pour inhiber la réception de signaux d'émission parasites dans une bande de fréquences de réception et la chaîne d'émission comporte des moyens de commande des moyens d'inhibition.

Avantageusement, les moyens d'inhibition comportent un filtrage d'élimination d'harmoniques d'une bande de fréquences de la chaîne d'émission.

Ainsi, si la chaîne de réception comporte des éléments non linéaires susceptibles d'effectuer une transposition de fréquence par une démodulation parasite, ces éléments ne reçoivent pas de signal harmonique risquant d'être transposé à la fréquence de réception.

Avantageusement, les moyens d'inhibition comportent, dans la chaîne d'émission, des moyens pour dériver, sur la chaîne de réception, des signaux d'émission parasites et, dans la chaîne de réception, des moyens pour opposer ces signaux d'émission parasites dérivés aux signaux d'émission parasites reçus par l'antenne de la chaîne de réception.

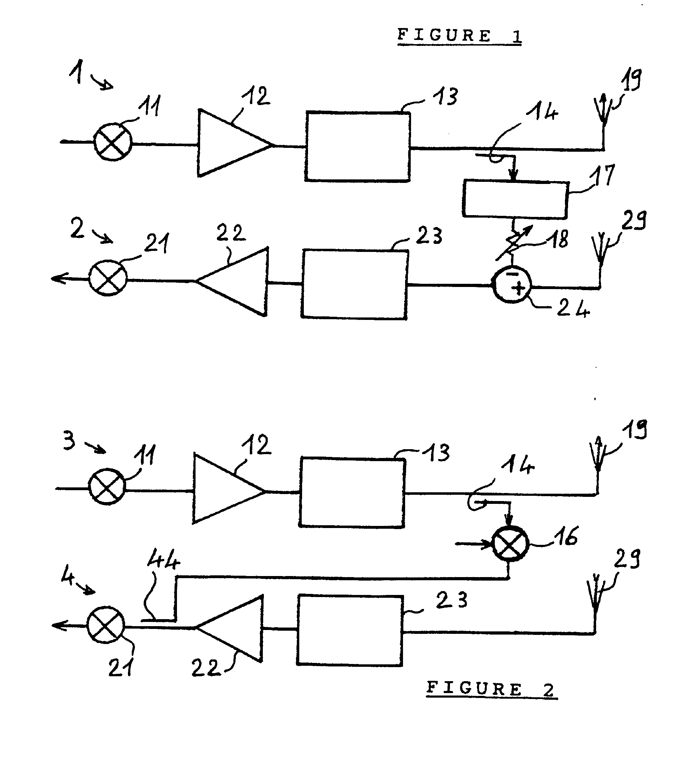

L'invention sera mieux comprise à l'aide de la description suivante de quatre formes de réalisation avantageuses d'un bloc radio full-duplex du terminal mobile de l'invention, représentées respectivement sur les figures 1, 2, 3 et 4 du dessin annexé.

La figure 1 représente deux chaînes radio d'un terminal mobile de radiotéléphonie cellulaire, la référence 1 désignant une chaîne d'émission et la référence 2 une chaîne de réception.

La chaîne d'émission 1 fonctionne ici dans une plage ou bande de 60 MHz, centrée sur 1950 MHz, et la chaîne de réception 2 fonctionne ici dans une bande de 60 MHz centrée sur 2140 MHz.

La chaîne d'émission 1 comporte un modulateur 11 classique fournissant une porteuse dans la bande basse considérée, modulée par des données ou bits à émettre. Le signal issu du modulateur 11 traverse un amplificateur 12 suivi d'un filtre 13 séparateur de voies, atténuant les parasites émis dans la bande, ici haute, de la chaîne de réception 2. Il s'agit donc ici d'un filtre passe-bas qui transmet à 1980 MHz et atténue à 2110 MHz. Le filtre 13 aurait pu être prévu du type passe-bande ou encore coupe-bande et alors accordé sur la bande de fréquences de réception.

Une antenne d'émission dédiée 19 est reliée en sortie du filtre passe-bas 13.

La chaîne de réception 2 comporte une antenne de réception dédiée 29 reliée, ici indirectement, à un filtre d'entrée passe-bande 23, accordé sur la bande de réception, commandant un amplificateur 22, à étage d'entrée à faible bruit. L'amplificateur 22 commande un démodulateur classique 21 fournissant un flux de bits extraits du signal qui a été reçu par l'antenne 29.

Les chaînes 1 et 2 sont reliés l'une à l'autre afin d'inhiber la réception de signaux d'émission parasites dans la bande de réception.

Les antennes 19 et 29 sont en effet proches l'une de l'autre, puisqu'il s'agit d'un terminal portable, et, même si le filtre 13 présente une bonne efficacité de filtrage, les parasites atténués qu'il transmet à l'antenne d'émission 19 sont reçus, sans atténuation importante de transmission radio, par l'antenne de réception 29.

Pour inhiber les parasites reçus, la chaîne de réception 2 comporte un circuit analogique 24 à deux entrées, relié en sortie à l'entrée du filtre passe-bande 23 et relié par une première entrée à l'antenne 29 et, par une deuxième entrée, à une voie dérivée de la chaîne d'émission 1. Le circuit 24 est ici un amplificateur à faible bruit.

La voie dérivée ci-dessus est constituée d'un déphaseur réglable 17 en série avec un atténuateur 18, recevant une partie du signal appliqué à l'antenne 19, prélevée par un coupleur capacitif à microruban 14.

La voie dérivée d'inhibition 17, 18 est réglée pour fournir un signal de même amplitude que le signal parasite d'émission capté par l'antenne de réception 29.

Le signal d'inhibition est retranché du signal capté, c'est-à-dire qu'il est effectué l'addition de deux signaux opposés, d'amplitudes égales et déplacés de 180 degrés. Le déphasage de 180 degrés peut être réalisé dans le déphaseur 17, et l'amplificateur 24 est alors un additionneur, ou bien le déphaseur 17 est réglé à un déphasage nul par rapport au parasite de l'antenne de réception 29 et l'amplificateur 24 est alors un soustracteur, comme illustré sur la figure 1.

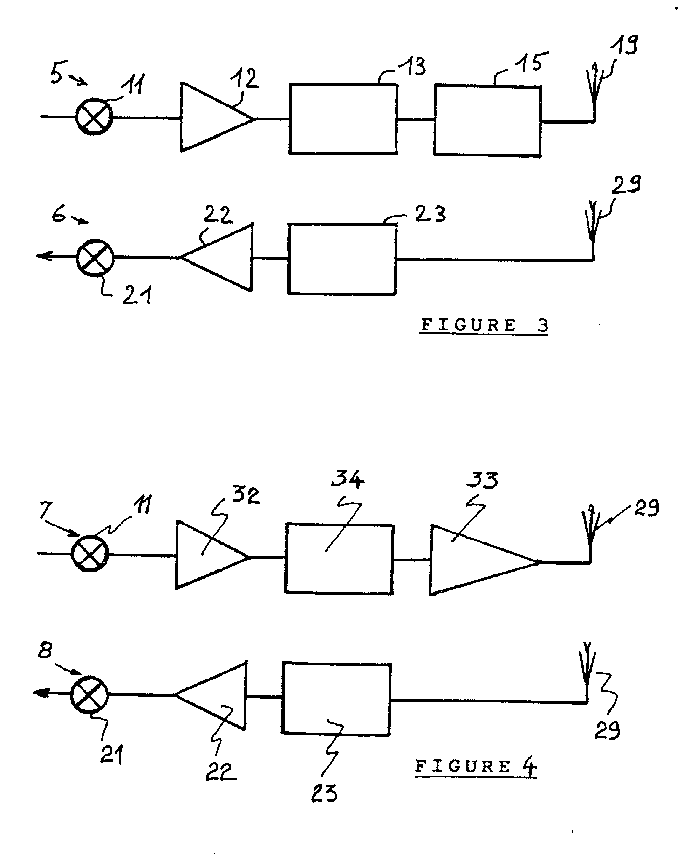

Dans les figures 2 et 3, les éléments de fonctions semblables à celles de la figure 1 ont conservé leurs références.

Dans la forme de réalisation de la figure 2, avec une chaîne d'émission 3 et une chaîne de réception 4, la chaîne d'émission 3 comporte, dans le sens de propagation des signaux, le modulateur 11, l'amplificateur 12, le filtre passe-bande 13, le coupleur dérivateur 14 et l'antenne 19.

La chaîne de réception 4 comporte l'antenne 29 reliée directement au filtre passe-bande 23 suivi de l'amplificateur 22 et du démodulateur 21.

Un coupleur d'inhibition 44, à microruban, est couplé capacitivement à la liaison d'entrée du démodulateur 44 pour y injecter un signal d'inhibition provenant de la chaîne d'émission 3.

Le coupleur d'inhibition 44 a, globalement, une fonction semblable à celle de l'amplificateur 24. Il est relié au coupleur d'extraction 14 par un circuit 16 de transposition de fréquence qui fournit un signal d'inhibition des parasites radio, cette inhibition étant effectuée après amplification dans l'amplificateur 22. Les circuits de réglage associés 17, 18 n'ont pas été dessinés.

La figure 3 représente une chaîne d'émission 5 et une chaîne de réception 6. La chaîne d'émission 5 comporte, dans l'ordre, le modulateur 11, l'amplificateur 12, le filtre passe-bas 13, l'antenne 19 et en outre un filtre réjecteur, coupe-bande, 15 en série entre le modulateur 11 et l'antenne 19, ici reliant à celle-ci le filtre passe-bas 13.

Le filtre coupe-bande 15 est ici à fréquence réglable par programmation.

Le filtre coupe-bande 15 atténue le bruit créé par l'amplificateur à la fréquence de réception.

Le filtre coupe-bande 15 est constitué d'étages de circuits résonnants, à inductance et capacité, ou de circuits équivalents (résonateurs diélectriques,...), pour couvrir au total au moins les 60 MHz voulus en décalant la fréquence de résonance du filtre. Chaque étage comporte une inductance classique associée à une diode à capacité variable polarisée par une tension continue de réglage de la capacité, réglage provenant d'un processeur de programmation du filtre 15.

On peut ainsi constituer un dipôle de court-circuit sélectif, à éléments L et C mutuellement en série, que l'on branche en parallèle sur la liaison à filtrer.

On peut aussi prévoir un dipôle bouchon, à éléments L et C mutuellement en parallèle, que l'on monte en série dans la liaison. Le processeur de programmation est relié au bloc radio pour téléprogrammer le filtre 15 depuis le réseau téléphonique.

La chaîne de réception 6 comporte l'antenne 29, reliée directement au filtre passe-bande 23 commandant l'amplificateur 22 suivi du démodulateur 21. Ces deux derniers éléments sont susceptibles de présenter des non-linéarités et donc d'avoir un effet démodulateur parasite transposant, dans la bande de réception, une partie de l'énergie d'un signal parasite.

Le filtre coupe-bande 15 est de ce fait réglé pour atténuer les signaux émis à la fréquence de réception du récepteur. La bande de fréquence atténuée est réglée en fonction de la fréquence de réception.

En variante, et dans la quatrième forme de réalisation de la figure 4, qui ne se distingue de la précédente que par sa chaîne d'émission 7, la chaîne de réception 8 étant identique, il est prévu un filtre passe-bande 34 inséré dans la chaîne d'amplification elle-même, séparée en deux amplificateurs 32, 33, respectivement en amont et en aval du filtre 34. L'intérêt de cette solution est de réduire considérablement le bruit à la sortie de la chaîne d'amplification (33), à l'entrée de l'antenne 29, le gain des amplificateurs pouvant être très réduit.

## Revendications

1. Terminal mobile de réseau de radiotéléphonie comportant des moyens radio comprenant une chaîne d'émission (1) et une chaîne de réception (2) agencées pour fonctionner en full-duplex dans deux bandes de fréquences respectives, dans lequel chaque chaîne (1, 2) comporte une antenne dédiée (19, 29) et les moyens radio comportent des moyens (13, 15, 16, 17, 24, 44) agencés pour inhiber la réception de signaux d'émission parasites dans une bande de fréquences de réception,
**caractérisé en ce que**
les moyens d'inhibition comportent un circuit de transposition de fréquence (16) couplé entre la chaîne d'émission (1) et la chaîne de réception (2), dans lequel le circuit de transposition de fréquence (16) est couplé à la chaîne de réception (2) par un coupleur capacitif (44) de telle manière que le circuit de transposition de fréquence (16) fournit un signal d'inhibition à la liaison d'entrée d'un démodulateur (21).

2. Terminal selon la revendication 1, dans lequel la chaîne d'émission (1) comporte des moyens (14) de commande des moyens d'inhibition (13, 15, 16, 17, 24, 44).

3. Terminal selon la revendication 1 ou 2, dans lequel au moins une partie des moyens d'inhibition (13, 15) est montée en série dans la chaîne d'émission (1).

4. Terminal selon la revendication 2, dans lequel les moyens de commande comportent un coupleur capacitif à micro-ruban (14).

5. Terminal selon l'une des revendications 1 à 4, dans lequel les moyens d'inhibition comportent, dans la chaîne d'émission (1), des moyens (14) pour dériver, sur la chaîne de réception (2), des signaux d'émission parasites et, dans la chaîne de réception (2), des moyens (44) pour opposer ces signaux d'émission parasites dérivés aux signaux d'émission parasites reçus par l'antenne (29) de la chaîne de réception (2).

6. Terminal selon la revendication 5, dans lequel les moyens pour opposer comportent un coupleur d'inhibition à micro-ruban (44) qui est couplé capacitivement à la chaîne de réception (2).

## Patentansprüche

1. Mobiles Endgerät eines Funktelefonnetzwerkes mit Funkmitteln umfassend eine Sendekette (1) und eine Empfangskette (2), die dazu eingerichtet sind, in Voll-Duplex in zwei jeweiligen Frequenzbereichen betrieben zu werden, wobei jede Kette (1, 2) eine dedizierte Antenne (19, 29) umfasst und die Funkmittel Mittel (13, 15, 16, 17, 24, 44) umfassen, die dazu eingerichtet sind, den Empfang von parasitären Sendesignalen in einem Empfangsfrequenzbereich zu unterdrücken,
**dadurch gekennzeichnet, dass**
die Unterdrückungsmittel eine Frequenztransponierungsschaltung (16) umfassen, die zwischen der Sendekette (1) und der Empfangskette (2) gekoppelt ist, wobei die Frequenztransponierungsschaltung (16) mit der Empfangskette (2) über einen kapazitiven Koppler (44) gekoppelt ist, so dass die Frequenztransponierungsschaltung (16) der Eingangsverbindung eines Demodulators (21) ein Unterdrückungssignal liefert.

2. Endgerät nach Anspruch 1, bei welchem die Empfangskette (1) Mittel (14) zur Steuerung der Unterdrückungsmittel (13, 15, 16, 17, 24, 44) umfasst.

3. Endgerät nach Anspruch 1 oder 2, bei welchem zumindest ein Teil der Unterdrückungsmittel (13, 15) in der Sendekette (1) in Serie geschaltet ist.

4. Endgerät nach Anspruch 2, bei welchem die Steuerungsmittel einen kapazitiven Koppler mit Mikrostrip (14) umfassen.

5. Endgerät nach einem der Ansprüche 1 bis 4, bei welchem die Unterdrückungsmittel in der Sendekette (1) Mittel (14) zum Ableiten, in der Empfangskette (2), von parasitären Sendesignalen, und, in der Empfangskette (2), Mittel (44) umfassen, um den von der Antenne (29) der Empfangskette (2) empfangenen parasitären Sendesignalen diese abgeleiteten parasitären Sendesignale entgegenzusetzen.

6. Endgerät nach Anspruch 5, bei welchem die Mittel zum Entgegensetzen einen Unterdrückungskoppler mit Mikrostrip (44) umfassen, der mit der Empfangskette (2) kapazitiv gekoppelt ist.

## Claims

1. Mobile terminal of a radio telephony network having radio means comprising a transmission chain (1) and a reception chain (2) that are arranged for operating in full-duplex in two respective frequency bands, wherein each chain (1, 2) comprises a dedicated antenna (19, 29) and the radio means comprise means (13, 15, 16, 17, 24, 44) that are arranged for inhibiting the reception of parasitic transmission signals in a reception frequency band,
**characterized in that**
the inhibition means comprise a frequency transposition circuit (16) coupled between the transmission chain (1) and the reception chain (2), wherein the frequency transposition circuit (16) is coupled to the reception chain (2) by a capacitive coupler (44) so that the frequency transposition circuit (16) delivers an inhibition signal to the input link of a demodulator (21).

2. Terminal according to claim 1, wherein the transmission chain (1) comprises means (14) for controlling the inhibition means (13, 15, 16, 17, 24, 44).

3. Terminal according to claim 1 or 2, wherein at least one part of the inhibition means (13, 15) is mounted in series in the transmission chain (1).

4. Terminal according to claim 2, wherein the controlling means comprise a micro-strip capacitive coupler (14).

5. Terminal according to one of claims 1 to 4, wherein the inhibition means comprise, in the transmission chain (1), means (14) for deriving, in the reception chain (2), parasitic transmission signals and, in the reception chain (2), means (44) for opposing these derived parasitic transmission signals to the parasitic transmission signals received by the antenna (29) of the reception chain (2).

6. Terminal according to claim 5, wherein the opposing means comprise a micro-strip inhibition coupler (44) that is capacitively coupled to the reception chain (2).
